# EUROPEAN PATENT APPLICATION

(11) **EP 1 385 245 A1**
(43) Date of publication of application: **28.01.2004**
(21) Application number: 02360223.8
(22) Date of filing: 26.07.2002
(51) Int. Cl.: H02G 7/00, G02B 6/44

(54) **Self-supporting cable duct**

(71) Applicant: ALCATEL, 75008 Paris (FR)
(72) Inventor: Nothofer, Klaus, 40699 Erkrath (DE); Teschner, Wolfgang, 31515 Wunstorf (DE)
(74) Representative: Brose, Gerhard

(57) **Abstract**

An aerial cable duct which comprises at least one tube (3) for the installation of cables, and at least one strength element (1) alongside the tube, both embedded in a common surrounding sleeve (2), made in such a manner that the cable duct has a circular cross section; and an aerial cable duct which comprises at least one tube for the installation of cables, and at least one strength element alongside the tube, both embedded in a common surrounding sleeve, made in such a manner that the cable duct has a Figure-8 cross section, wherein the duct is made of a steel material, preferably a corrugated welded stainless steel.

## Description

### Field of the Invention and Related Art

The invention relates to an aerial cable duct which comprises at least one tube for the installation of cables, and at least one strength element alongside the tube, both embedded in a common surrounding sleeve.

Fiber optic cables are commonly deployed by installing them in ducts either by blowing or pulling, burying them in the ground, or suspending them between above-ground poles, or the like, along aerial rights of way. Because aerial rights of way have been widely established, fiber optic cables can often be more cost effectively deployed in aerial rights of way than in subterranean rights of way. Further, the fiber optic cables that are buried in the ground are often damaged by unintentional excavation of the cables or in some cases an excavation is not feasible. For example, in urban areas it is often impractical to bury fiber optical cable, and aerially mounting the cable is the preferred method of installing it.

Aerial installations of transmission cables have been described in the art. Transmission cables which do not posess the mechanical integrity to be self-supporting must either be lashed to a guide wire or inserted into a duct that is in turn lashed to a guide wire. Self-supporting cables can be installed in an aerial environment without the use of a messenger. They are reinforced with internal strength members to support their own weight. There are two major types of self-supporting cables, Figure-8 and All-Dielectric Self-Supporting (ADSS).

In U.S. Pat. No. 4,763,983 and G.B. Pat. No. 2,230,106 is disclosed an optical aerial cable which has a figure-of-eight transverse cross-section, with a supporting messenger in one of the lobes.

Further, in U.S. Pat. No. 5,678,609 an aerial duct with Figure-eight design is also disclosed. Due to this approach the replacement of obsolete and damaged transmission cable will be carried out in a practical and cost effective manner. The aerial duct is though made of a dielectric material (HDPE, LLDPE) because such non-conductive construction could be advantageous for installations where such need is desirable. For example, it would help to protect fiber optical cable where lightning is a concern and would not require grounding.

### Object of the Invention

The object of the present invention is to develop a very economical and extremely robust aerial cable duct, particularly suitable for the subsequent blowing-in of optical fibers or cables.

This object is achieved according to the invention by an aerial cable duct which comprises at least one tube for the installation of cables, and at least one strength element alongside the tube, both embedded in a common surrounding sleeve, made in such a manner that the cable duct has a circular cross section, and an aerial cable duct which comprises at least one tube for the installation of cables, and at least one strength element alongside the tube, both embedded in a common surrounding sleeve, made in such a manner that the cable duct has a Figure-8 cross section, wherein the tube is made of a steel material, preferably a corrugated welded stainless steel.

It is to notice that sometimes the terms duct and tube are used as synonymous by experts in the art. Indeed the difference is minimal and depends on what is intended to emphasize, for example, the duct can be understood as the capacity of a pipe to carry something (liquid, gas, wires or cables) inside, that is, a certain inner space limited by walls, and the tube as the physical element which implements the duct.

Advantageous configurations of the invention emerge from the dependent claims, the following description and the drawings.

### Brief Description of the Drawings

An embodiment example of the invention is now explained with the aid of Figs. 1 to 4.

Fig. 1 shows an aerial self-supporting cable duct with circular cross section.

Fig. 2 shows the aerial self-supporting cable duct with circular cross section from Figure 1 with spacers added to the tube.

Fig. 3 shows the aerial self-supporting cable duct with circular cross section from Figure 1 with multiple inner tubes added to the duct.

Fig. 4 shows an aerial self-supporting cable duct with Figure-eight cross section.

### Detailed Description of the Drawings

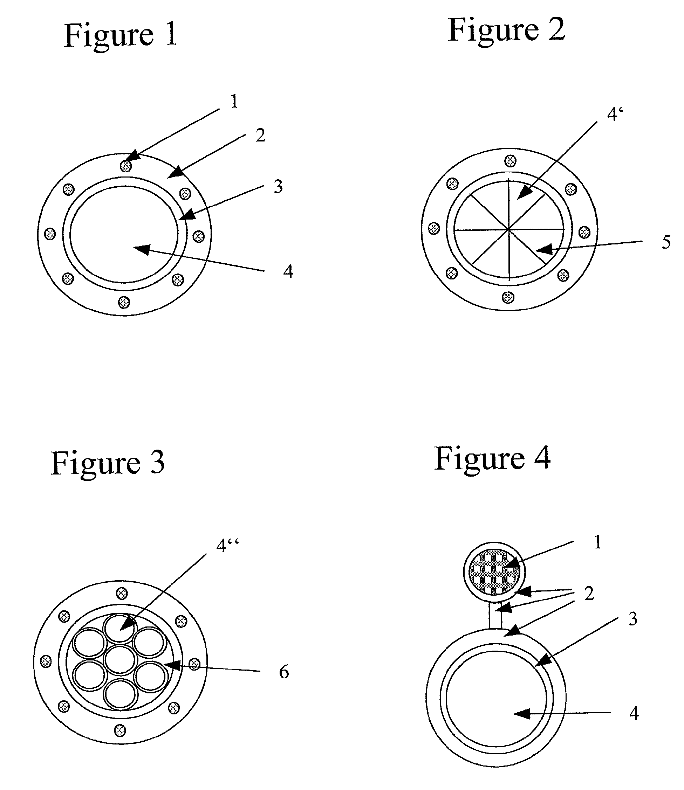

Figure 1 shows an aerial self-supporting cable duct with circular cross section. It comprises a tube 3 and a plurality of strength elements 1 and a common sleeve or overjacket 2 surrounding them. The duct 4 is suitable for the installation of optical fiber cable (not shown).

The tube 3 is made preferably of plastic material or metal. A very robust solution is given by the tube 3 being made of steel, preferably stainless steel, which was formed from a tape and welded together. Additionally, it is advantageous, for the purpose of reducing friction when blowing cable inside the duct, that the inner tube 3 surface is corrugated or profiled in any other manner with a profile depth in the range of about 0.1% to 15% of the tube inner diameter, or coated with a low friction material, e.g. PTFE.

The strength member(s)1 can consist of ropes or single steel or fiber reinforced plastic rods, or bundles of fibers, e.g. glass or aramide which are stranded over the tube or running in parallel to it. The tube 3 together with the strength elements 1 are embedded in a common overjacket 2.

A so designed aerial self-supporting cable duct would provide high protection against corrosion, water or humidity ingress, and mechanical damage, either during the installation or when in operation, such as hammer impact, rodent attacks, or hunting bullets. Furthermore, the corrugation or any other inner tube surface profile increases the radial compression, helps reducing the friction with the cable to be installed and provides longitudinal airflow alongside the cable.

Figure 2 shows the aerial self-supporting cable duct with circular cross section from Figure 1 with spacers 5 added, which divide the duct 4 into a plurality of sub-ducts 4' so that cable can be installed, preferably blown-in, in any of them.

Figure 3 shows another alternative for the aerial self-supporting cable duct with circular cross section from Figure 1. The duct 4 is equipped with multiple inner tubes 6 which divide it into a plurality of sub-ducts 4" so that cable can be installed, preferably blown-in, in any of them.

Figure 4 shows a very economical and extremely robust Figure-eight cable duct design. It comprises a tube 3, a strength element 1, and a common sleeve or overjacket 2 surrounding both. The duct 4 is suitable for the installation, preferably blown-in, of optical fiber cable (not shown).

The tube 3 is made of steel, preferably stainless steel, which is formed from a tape and welded together. Additionally, it is advantageous, for the purpose of reducing friction when blowing cable inside the duct, that the inner tube 3 surface is corrugated or profiled in any other manner with a profile depth in the range of about 0.1% to 15% of the tube inner diameter, or coated with a low friction material, e.g. PTFE.

The strength member 1 can consist of ropes or single steel or fiber reinforced plastic rods, or bundles of fibers, e.g. glass or aramide which are stranded over the tube 3, or running in parallel to it. The tube 3 together with the strength elements 1 are embedded in a common overjacket 2.

## Claims

1. An aerial cable duct which comprises at least one tube (3) for the installation of cables, and at least one strength element (1) alongside the tube (3), both embedded in a common surrounding sleeve (2), **characterized in that** it is made in such a manner that the cable duct has circular cross section.

2. The aerial cable duct according to claim 1 **characterized in that** the tube (3) is made of metal or plastic.

3. The aerial cable duct according to claim 1 **characterized in that** the tube (3) inner surface is corrugated or profiled in any other manner.

4. The aerial cable duct according to claim 1 **characterized in that** the common surrounding sleeve (2) is made of metal or plastic.

5. The aerial cable duct according to claim 1 **characterized in that** the tube (3) has spacers (5) which divide it in sub-ducts (4').

6. The aerial cable duct according to claim 1 **characterized in that** the tube (3) is equipped with multiple inner tubes (6) which divide it in sub-ducts (4'').

7. An aerial cable duct which comprises at least one tube (3) for the installation of cables, and at least one strength element (1) alongside the tube (3), both embedded in a common surrounding sleeve (2), made in such a manner that the cable duct has a Figure-8 cross section **characterized in that** the tube (3) is made of a steel material.

8. The aerial cable duct according to claim 7 **characterized in that** the tube (3) is a corrugated welded stainless steel tube.
